# EUROPÄISCHE PATENTSCHRIFT

(11) **EP 0 523 522 B1**
(45) Veröffentlichungstag und Bekanntmachung des Hinweises auf die Patenterteilung: **09.12.1998**
(21) Anmeldenummer: 92111537.4
(22) Anmeldetag: 08.07.1992
(51) Int. Cl.: G01N 35/02, G01N 21/76, G01N 1/00

(54) **Strahlungsmessgerät, insbesondere zur Lumineszenzmessung**
Radiation measuring apparatus, in particular for measuring the luminescence
Appareil de mesure de radiations, en particulier pour la mesure de la luminescence

(30) Priorität: 18.07.1991 DE 4123818
(43) Veröffentlichungstag der Anmeldung: 20.01.1993
(60) Teilanmeldung: 97111105.9
(73) Patentinhaber: Laboratorium Prof. Dr. Rudolf Berthold GmbH & Co., 75323 Bad Wildbad (DE)
(72) Erfinder: Berthold, Fritz, Dr., W-7530 Pforzheim (DE); Lohr, Willy, W-7547 Wildbad (DE)
(74) Vertreter: Frank, Gerhard, Dipl.-Phys.

(56) Entgegenhaltungen:
- EP-A- 0 136 002
- EP-A- 0 181 060
- EP-A- 0 314 448
- DE-A- 3 110 239
- DE-A- 3 623 601
- US-A- 4 297 105
- US-A- 4 772 453

## Beschreibung

Die Erfindung betrifft ein Strahlungsmeßgerät, insbesondere zur Lumineszenzmessung nach dem Oberbegriff des Patentanspruches 1.

Ein derartiges Strahlungsmeßgerät ist aus der US-PS 4,772,453 bekannt. Das aufgrund der Lumineszenzreaktion nach oben aus einem Probengefäß austretende Licht wird bei dieser vorbekannten Anordnung über eine Sammel- und Umlenkoptik dem in einem lichtdichten Gehäuse angeordneten Photomultiplier zugeleitet. Die Injektionsvorrichtung zum Eindringen der die Lumineszenzreaktion aktivierenden Substanz befindet sich hierbei über dem benachbarten, als nächstes auszumessenden Probengefäß, so daß zwischen der Zugabe der Injektionsflüssigkeit und dem Beginn der Lumineszenzmessung zwangsläufig eine Totzeit liegt, die durch den Transport der Probengefäße um eine Position weiter verursacht ist.

Diese Totzeit ist ohne Bedeutung, wenn die "Lumineszenzantwort" des in den Probengefäßen befindlichen Analyten relativ langsam und lang andauernd ist, so daß eine definierbare Zeitspanne dieses "Lumineszenzglühens" (US-PS 4,772,453 Spalte 2, Zeile 59) zuverlässig zur Analyse ausgewählt werden kann.

Es gibt jedoch Typen von Lumineszenzreaktionen, bei denen in der Größenordnung von einer Sekunde oder Bruchteilen nach der Zugabe der die Lumineszenzreaktion aktivierenden Substanz bereits eine blitzartige Lumineszenzantwort erfolgt, d.h. diese Lumineszenzantwort würde mit Sicherheit zum größten Teil in der Totzeit der Meßvorrichtung gemäß der US-PS 4,772,453 liegen, nämlich während der Transportzeit des benachbarten Probengefäßes in den Meßbereich des Photomultipliers bzw. der vorgeschalteten Optik.

Diese vorbekannte Vorrichtung ist daher ungeeignet für die Auswertung "schneller Lumineszenzreaktionen", da Injektion und Messung infolge der räumlichen Trennung von Injektorspitze und Meßoptik nicht gleichzeitig erfolgen können.

In der EP-A-0 136 002 wird zur Absorptionsmessung vorgeschlagen, die Spitze einer seitlich von einem Lichtdetektor angeordneten Injektionsvorrichtung in einen Bereich unterhalb des Lichtdetektors abzubiegen, wenn eine Verschiebung des aktuell auszumessenden Probengefäßes zwischen Injektion und Messung vermieden werden soll. Dies hat jedoch den Nachteil, daß ein relativ großer Teil des Lichtwegs versperrt wird, was zu einer Erniedrigung der Empfindlichkeit führt.

Eine weitere Möglichkeit der erwünschten gleichzeitigen Injektion und Messung besteht darin (US-PS 4,396,579), die die Lumineszenzreaktion aktivierende Substanz von oben in ein spezielles Probengefäß zuzugeben und durch den durchscheinenden Boden des Probengefäßes die Lumineszenzantwort mit dem Photomultiplier zu registrieren bzw. analysieren. Hierzu sind jedoch spezielle Probengefäße bzw. Probengefäßanordnungen erforderlich, die einer Automatisierung solcher Verfahren im Wege stehen, insbesondere können hier nicht inzwischen standardisierte Mikrotestplatten ("Mikrotiter"-Platten) eingesetzt werden.

Letzteres gilt auch für die Meßvorrichtung nach der DE-0S 36 23 601, wo die Injektion von oben, die Messung der Lumineszenzantwort seitlich durch die Wandung des Probengefäßes erfolgt; auch hier sind spezielle Probengefäße oder Probengefäßhalterungen erforderlich. Eine ähnliche Anordnung zeigt auch die DE-0S 29 01 919.

Die EP-0 181 060 A2 zeigt eine Möglichkeit, eine Mehrzahl von matrixartig angeordneten Probengefäßen auszumessen und ist somit grundsätzlich auch für den Einsatz der genannten Mikrotestplatten geeignet; allerdings wird dort nichts gesagt über die Zugabe der die Lumineszenzreaktion aktivierenden Substanz, was folglich nur vor dem Aufsetzen des Strahlungsdetektors bzw. des Lichtleiterkabels erfolgen kann und demnach die oben erläuterten Nachteile der gattungsbildenden US-PS 4,772,453 impliziert.

Ausgehend vom gattungsgemäßen Strahlungsmeßgerät besteht die Aufgabe der Erfindung daher darin, diese Vorrichtung so weiterzubilden, daß Messung und Injektion gleichzeitig erfolgen können, wobei insbesondere die Möglichkeit der Messung von Mikrotestplatten erhalten bleiben soll.

Die erfindungsgemäße Lösung dieser Aufgabe zeigt der kennzeichnende Teil des Patentanspruchs 1.

Vorteilhafterweise werden als Elemente zur Lichtleitung ein Bündel von etwa 8-9 Lichtleitern eingesetzt/die Ausbildung des Endbereichs der Injektionsvorrichtung als Injektionsschlauch oder -rohr, der/das dann unter spitzem Winkel in eine Lücke zwischen diesen benachbarten Lichtleitern bis unterhalb der Eintrittsblende geführt ist, gewährleistet, so daß einerseits die konzentrische Anordnung der Lichtleiter im Lichtleiterbündel nicht gestört wird und andererseits der zwangsläufig eintretende Empfindlichkeitsverlust durch die in den Eintrittsquerschnitt ragende Spitze des Injektionsschlauchs minimierbar ist.

In konstruktiver Hinsicht besteht eine besonders vorteilhafte Ausbildung darin, daß der Injektionsschlauch außerhalb des Lichtleiterbündels in einem Gehäuse geführt ist, wo er mit einem oberen Flansch auf dem Boden einer Bohrung des Gehäuses festsitzt und wobei sein Flansch mit dem Flansch eines Anschlußschlauchs gekoppelt ist, wozu die Bohrung des Gehäuses zumindest teilweise ein Innengewinde aufweist, in dem ein Gewindefitting geführt ist, durch den sich der Anschlußschlauch axial erstreckt, derart, daß die Flansche von Injektionsschlauch und Anschlußschlauch bei festgezogenem Gewindefitting dichtend aufeinandergepreßt sind.

Dieser Aufbau ermöglicht eine einfache Montage/Demontage der Elemente der Injektionsvorrichtung, was insbesondere für Reinigungszwecke sehr nützlich ist.

Weitere Ausgestaltungen zur Ausbildung der Injektionsvorrichtung sind weiteren Unteransprüchen entnehmbar.

Das Lösungsprinzip der Erfindung wird nun anhand von Zeichnungen erläutert. Es zeigen:
- Fig. 1: einen Vertikalschnitt durch ein Ausführungsbeispiel der ersten Lösungsvariante des Strahlungsmeßgerätes in der Ebene I-I der Fig. 3,
- Fig. 2: eine Unteransicht in Richtung des Pfeiles P der Fig.1,
- Fig. 3: eine Seitenansicht in Richtung des Pfeiles A der Fig. 1.

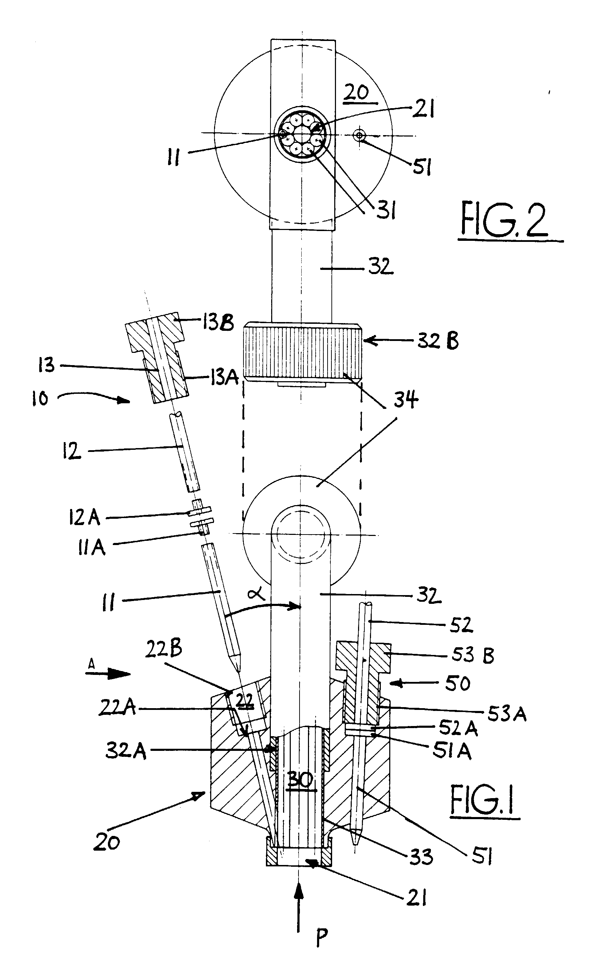

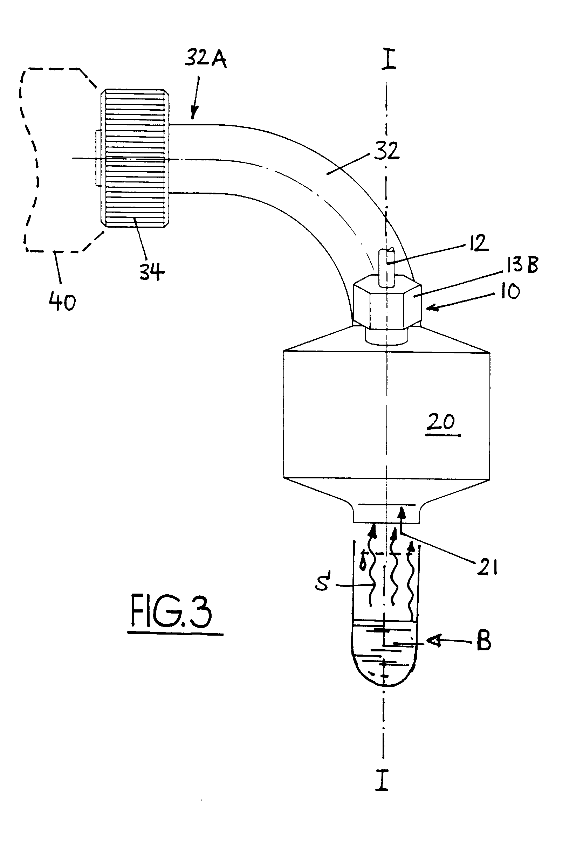

Das Strahlungsmeßgerät nach den Figuren 1-3 besteht im wesentlichen aus drei Komponenten: ein Bündel 30 von Lichtleitern, dessen eines Ende einem Probengefäß B zugeordnet ist, aus dem die zu messende Strahlung S eintritt, und dessen anderes Ende an einen Strahlungsdetektor 40, beispielsweise einen Photomultiplier gekoppelt ist, der diese Strahlung mißt, sowie mit einem oberhalb des Probengefäßes B angeordneten Gehäuse 20 zur Aufnahme verschiedener Injektionsvorrichtungen 10 und 50.

Die Geometrie der im Ausführungsbeispiel dargestellten Anordnung ist derart gewählt, daß der Eintrittsquerschnitt 21 des Lichtleiterbündels 30 horizontal liegt und das Lichtleiterbündel 30 um einen Winkel von 90° in die Horizontale umgelenkt wird, so daß auch die Längsachse des anschließenden Photomultipliers 40 horizontal liegt. Das Lichtleiterbündel 30 besteht aus acht oder neun parallel verlaufenden Lichtleitern 31, beispielsweise so, daß um einen zentralen Lichtleiter kreisförmig acht weitere Lichtleiter gruppiert sind. Das Lichtleitungsbündel 30 ist an seinem vorderen Ende von einer Metallhülse 33 umschlossen, die insbesondere aus Edelstahl gefertigt ist und sozusagen den seitlichen, optischen Abschluß des Lichtleiterbündels 30 bildet.

Zur Erzielung der 90°-Abbiegung und zum äußeren mechanischen Schutz dient ein Aluminiumrohr 32, an dessen dem Photomultiplier zugewandten Ende 32A eine Überwurfmutter 34 angeordnet ist, durch die das Rohr 32 drehbar und lösbar mit dem Eingang des Strahlungsdetektors 40 verbindbar ist.

Das andere Ende 32A des Rohres 32 sitzt in einem Aluminiumgehäuse 20, das sich bis zum Eintrittsquerschnitt 21 erstreckt und im wesentlichen zur Aufnahme der Injektionsvorrichtungen 10 und 50 dient.

Die beiden Injektionsvorrichtungen 10 und 50 sind konstruktiv gleich aufgebaut, so daß im folgenden jeweils die Bezugszeichen, die korrespondierende Bauteile wiedergeben, in Klammern für die zweite Injektionsvorrichtung 50 wiedergegeben sind:

Im Gehäuse 20 sind Bohrungen verschiedenen Durchmessers und verschiedener Art eingebracht, die sich von der oberen kegelmantelförmigen Fläche im wesentlichen vertikal nach unten erstrecken, wobei die Längsachse der Bohrung der ersten Injektionsvorrichtung 10 um einen Winkel α von etwa 20° gegen die Vertikale geneigt ist, die korrespondierende Bohrung für die zweite Injektionsvorrichtung 50 verläuft senkrecht oder um einen sehr kleinen Winkel von etwa 3-5° aus der Vertikalen geneigt.

Der jeweils untere Teil der Bohrung ist so bemessen, daß er einen Injektionsschlauch 11 (51) aufnimmt, der so lang ist, daß seine untere Spitze aus dem Gehäuse 20 hervortritt, wobei von Bedeutung ist, daß die Spitze des Injektionsschlauchs 11 im Eintrittsquerschnitt 21 endet, die Spitze des Injektionsschlauchs 51 außerhalb davon.

An seinem oberen Ende weist der Injektionsschlauch 11 (51) einen eingesetzten Flansch 11A (51A) auf, mit dem er auf der durch eine Verbreiterung der Bohrung 22 gebildeten Ringschulter 22A aufsitzt.

Unmittelbar an den Flansch 11A schließt umgekehrt der Flansch 12A (52A) eines Anschlußschlauches 12 (52) an. Der Anschlußschlauch 12 verläuft durch ein Gewindefitting 13, dessen unteres, in der Bohrung 22 sitzendes Ende 13A ein Gewinde aufweist, mit dem es in einem entsprechenden Innengewinde 22B der Bohrung 22 festgezogen werden kann. Das obere Ende 13B (32B) ist beim dargestellten Ausführungsbeispiel als Mehrkantschraube ausgeführt.

Die bezüglich der Injektionsvorrichtung 10 in Fig. 1 (linke Seite) in einer Explosionsdarstellung gezeigten erläuterten Bestandteile sind bezüglich der Injektionsvorrichtung 50 auf der rechten Seite der Fig. 1 in montiertem Zustand dargestellt: Hierzu wird das Gewindefitting 13 in die Bohrung 22 eingeschraubt, bei festgezogenem Gewindefitting werden die beiden zueinandergewandten Flächen der Flansche 11A/12A (51A/52A) dichtend aufeinandergepreßt. Das (nicht dargestellte) andere Ende der Anschlußschläuche 12 (52) ist beispielsweise mit je einer Pumpe verbunden, durch die eine chemische Substanz durch den Injektionsschlauch 11 (51) in ein Probengefäß B injiziert werden kann, das sich entweder unmittelbar unterhalb der Eintrittsblende 21 (Injektionsschlauch 11) oder unmittelbar daneben (Injektionsschlauch 51) befindet. Mit der ersten Injektionsvorrichtung 10 ist es somit möglich, praktisch gleichzeitig das entsprechende chemische Reagens (beispielsweise eine lumineszenz-aktivierende Substanz) in das Probengefäß B zu injizieren und den unmittelbar darauf entstehenden Photonen (Strahlung S) über die Lichtleiter 31 vom Strahlungsdetektor 40 (Photomultiplier) auswerten zu lassen.

Das Strahlungsmeßgerät ist einfach in seinem Aufbau, die Injektionsvorrichtungen 10 (50) können, wie insbesondere aus der Explosionsdarstellung der Fig. 1 leicht ersichtlich ist, einfach zerlegt und ggf. gereinigt werden, das Rohr 32 kann mit Hilfe der Überwurfmutter 34 leicht vom Detektor 40 gelöst sowie um die Längsachse des Photomultipliers geschwenkt werden, so daß die Ebene des Eintrittsquerschnitts 21 aus der Horizontalen heraus schwenkbar ist und in das Gesichtsfeld der Benutzerperson verschwenkt werden kann. Durch die Lösbarkeit der gesamten Baugruppe 32/20 vom Detektor 40 ist es auch sehr einfach möglich, bei Reparatur- oder Wartungsarbeiten eine Ersatzbaugruppe mit dem Strahlungsdetektor 40 zu verbinden und die Messung unmittelbar danach fortzuführen.

## Patentansprüche

1. Strahlungsmeßgerät, insbesondere, zur Lumineszenzmessung, mit einem Strahlungsdetektor, insbesondere einem Photomultiplier, der oberhalb eines Probengefäßes angeordnet werden kann, um die aus einer Öffnung des Probengefäßes austretende Strahlung zu erfassen, sowie mit einer Injektionsvorrichtung zur Zugabe einer chemischen Substanz in diese Öffnung des Probengefäßes, insbesondere zur Initiierung der Lumineszenzreaktion,
dadurch gekennzeichnet,
daß ein Lichtleiterbündel (30) mit einer Eintrittsblende vorgesehen ist, daß das Bündel die aus besagter Öffnung des Probengefäßes austretende, in die Eintrittsblende einfallende, Strahlung zum Strahlungsdetektor (40) leitet, und daß der Endbereich der Injektionsvorrichtung (10) als Injektionsschlauch oder -rohr (11) ausgebildet ist, der/das unter spitzem Winkel (α) relativ zu den Lichtleitern (31) in eine Lücke zwischen benachbarten Lichtleitern (31) innerhalb des Lichtleiterbündels (30) geführt ist, so daß das Ende des Injektionsschlauchs bzw.-rohres im Eintritts querschnitt des Lichtleiterbündels unterhalb der Eintrittsblende endet.

2. Strahlungsmeßgerät nach Anspruch 1, dadurch gekennzeichnet, daß das Lichtleiterbündel (30) aus 5-10, insbesondere 8 oder 9 Lichtleitern (31) besteht.

3. Strahlungsmeßgerät nach Anspruch 1, dadurch gekennzeichnet, daß das Ende des Injektionsschlauchs bzw.-Rohres durch den Umfangs- oder Randbereich des Lichtleiterbündels (30) geführt ist.

4. Strahlungsmeßgerät nach Anspruch 1, dadurch gekennzeichnet, daß der Injektionsschlauch (11) außerhalb des Lichtleiterbündels (30) in einem Gehäuse (20) geführt ist, wo er mit einem oberen Flansch (11A) auf einer Ringschulter (22A) einer Bohrung (22) des Gehäuses (20) festsitzt.

5. Strahlungsmeßgerät nach Anspruch 4, dadurch gekennzeichnet, daß der Flansch (11A) des Injektionsschlauches (11) mit dem Flansch (12A) eines Anschlußschlauchs (12) gekoppelt ist, wozu die Bohrung (22) des Gehäuses (20) zumindest teilweise ein Innengewinde (22B) aufweist, in dem ein Gewindefitting (13) geführt ist, durch den sich der Anschlußschlauch (12) axial erstreckt, derart, daß die Flansche (11A,12A) von Injektionsschlauch (11) und Anschlußschlauch (12) bei festgezogenem Gewindefitting (13) dichtend aufeinandergepreßt sind.

6. Strahlungsmeßgerät nach Anspruch 5, dadurch gekennzeichnet, daß das aus der Bohrung (22) des Gehäuses (20) ragende Ende des Gewindefitting (13) als Mehrkant- oder Rändelschraube (13B) ausgeführt ist.

7. Strahlungsmeßgerät nach Anspruch 5, dadurch gekennzeichnet, daß Injektionsschlauch (11) und Anschlußschlauch (12) aus PTFE, insbesondere schwarz pigmentiertem PTFE, sind.

8. Strahlungsmeßgerät nach Anspruch 1 und 4, dadurch gekennzeichnet, daß das Lichtleiterbündel (30) in einem Rohr (32), vorzugsweise aus Aluminium, geführt ist, dessen eines Ende (32A) vom Gehäuse (20) umschlossen ist und dessen anderes Ende mittels einer Überwurfmutter (34) dreh- und lösbar mit dem Strahlungsdetektor (40) verbunden ist, daß das Lichtleiterbündel (30) mit Hilfe des knieförmig abgebogenen Rohrs (32) um 90° aus seinem vertikalen Verlauf innerhalb des Gehäuses (20) zu dem horizontal liegenden Strahlungsdetektor (40) umgelenkt wird, und daß zwischen Lichtleiterbündel (30) und Rohr (32) eine Metallhülse (33), vorzugsweise aus Edelstahl, angeordnet ist, die sich über den Anschlußbereich zu den Probengefäßen erstreckt.

9. Strahlungsmeßgerät nach Anspruch 1 und 4, dadurch gekennzeichnet, daß das Gehäuse (20) eine weitere Injektionsvorrichtung (50) aufnimmt, die außerhalb des Eintrittsquerschnitts der Eintrittsblende (21) endet, und die vorzugsweise ebenfalls aus Injektionsschlauch (51), Anschlußschlauch (52) mit zugehörigen Flanschen (51A,52A) und Gewindefitting (53) besteht.

## Claims

1. Radiation meter, in particular for luminescence metering with a radiation detector, especially a photomultiplier which can be arranged above a sample container to detect the radiation emanating from an opening of the sample container, and also with an injection device for adding a chemical substance into this opening of the sample container, especially for initiating the luminescence reaction,
characterised in that
a fibre optic bundle (30) is provided with an entry shutter,
in that the bundle leads the radiation emanating from said opening of the sample container and proceeding into the entry shutter to the radiation detector (40), and
in that the end region of the injection device (10) is designed as an injection hose or tube (11) which is contained at a sharp angle (α) relative to the fibre optics (31) into a gap between adjacent fibre optics (31) within the fibre optic bundle (30) so that the end of the injection hose or tube ends in the entrance cross-section of the fibre optic bundle beneath the entry shutter.

2. Radiation meter according to Claim 1,
characterised in that
the fibre optic bundle (30) consists of 5-10, especially 8 or 9 fibre optics (31).

3. Radiation meter according to Claim 1,
characterised in that
the end of the injection hose or tube is contained by the circumference or edge area of the fibre optic bundle (30).

4. Radiation meter according to Claim 1,
characterised in that
the injection hose (11) is contained in a housing (20) outside the fibre optic bundle (30) where it is secured with an upper flange (11A) on a ring shoulder (22A) of a bore (22) of the housing (20).

5. Radiation meter according to Claim 4,
characterised in that
The flange (llA) of the injection hose (11) is coupled with the flange (12A) of a connection hose (12), for which purpose the bore (22) of the housing (20) has at least partly an inner thread (22B) in which a thread fitting (13) is contained, through which the connection hose (12) extends axially in such a way that the flanges (11A, 12A) of the infection hose (11) and the connection hose (12) are pressed together to form a seal when the thread fitting (13) is tightened.

6. Radiation meter according to Claim 5,
characterised in that
the end of the thread fitting (13) projecting out of the bore (22) of the housing (20) is configured as a polygon or knurled screw (13B).

7. Radiation meter according to Claim 5,
characterised in that
the injection hose (11) and the connection hose (12) are made of PTFE, especially black-pigmented PTFE.

8. Radiation meter according to Claims 1 and 4,
characterised in that
the fibre optic bundle (30) is contained in a tube (32), preferably made of aluminium, one end (32A) of which is surrounded by the housing (20) and the other end of which is connected rotatably and detachably to the radiation detector (40) by means of a swivel nut (34),
in that the fibre optic bundle (30) is turned round with the aid of the elbow-shaped bent tube (32) by 90° form its vertical extension within the housing (20) to the horizontally lying radiation detector (40), and
in that between the fibre optic bundle (30) and the tube (32) there is arranged a metal shell (33), preferably made of special steel and extending over the connection area to the sample containers.

9. Radiation meter according to Claims 1 and 4,
characterised in that
the housing (20) contains a further injection device (50) which ends outwith the entrance cross-section of the entry shutter (21) and which consists preferably also of an injection hose (51), a connection hose (52) with the pertinent flanges (51A, 52A) and a thread fitting (53).

## Revendications

1. Appareil de mesure du rayonnement, en particulier pour mesurer la luminescence, avec un détecteur de rayonnement, un photomultiplicateur notamment, qui peut être disposé au-dessus d'un têt pour enregistrer le rayonnement émergent d'une ouverture du têt, ainsi qu'avec un dispositif d'injection pour introduire une substance chimique dans cette ouverture du têt, en particulier pour initier la réaction de luminescence, caractérisé en ce qu'un faisceau de conduits de lumière (30) est muni d'un diaphragme d'entrée, en ce que le faisceau transmet au détecteur (40) le rayonnement émergent de ladite ouverture du têt et incident dans le diaphragme d'entrée, et en ce que la zone extrême du dispositif d'injection (10) est réalisée sous forme de flexible ou de tube d'injection (11), qui est guidé sous un angle aigu (α) par rapport aux conduits de lumière (31) dans un espace entre des conduits adjacents (31) à l'intérieur du faisceau (30), de sorte que l'extrémité du flexible et/ou du tube d'injection s'achève dans la section d'entrée du faisceau de conduits de lumière, au-dessous du diaphragme d'entrée.

2. Appareil de mesure du rayonnement suivant la revendication 1, caractérisé en ce que le faisceau ((30) se compose de 5 à 10, en paticulier de 8 ou 9 conduits de lumière (31).

3. Appareil de mesure du rayonnement suivant la revendication 1, caractérisé en ce que l'extrémité du flexible et/ou du tube d'injection est guidée au travers de la zone de bordure ou périphérique du faisceau de conduits de lumière (30).

4. Appareil de mesure du rayonnement suivant la revendication 1, caractérisé en ce que le flexible d'injection (11) est guidé à l'extérieur du faisceau de conduits de lumière (30) dans un boîtier (20), où il est bloqué par une bride supérieure (11A) sur un épaulement annulaire (22A) d'un trou (22) du boîtier (20).

5. Appareil de mesure du rayonnement suivant la revendication 4, caractérisé en ce que la bride (11A) du flexible d'injection (11) est couplée à la bride (12A) d'un flexible de raccordement (12), le trou (22) du boîtier (20) présentant à cet effet, en partie du moins, un taraudage (22B), dans lequel est guidé un raccord fileté (13) au travers duquel le flexible de raccordement (12) s'étend dans le sens axial, de sorte que les brides (11A, 12A) du flexible d'injection (11) et du flexible de raccordement (12) sont pressées hermétiquement l'une contre l'autre lorsque le raccord fileté (13) est serré à bloc.

6. Appareil de mesure du rayonnement suivant la revendication 5, caractérisé en ce que l'extrémité du raccord fileté (13), dépassant du trou (22) du boîtier (20), est réalisée sous forme de vis polygonale ou de vis moletée (13B).

7. Appareil de mesure du rayonnement suivant la revendication 5, caractérisé en ce que le flexible d'injection (11) et le flexible de raccordement (12) sont en PTFE, en particulier en PTFE pigmenté noir.

8. Appareil de mesure du rayonnement suivant les revendications 1 et 4, caractérisé en ce que le faisceau de conduits de lumière (30) est guidé dans un tube (32), en aluminium de préférence, dont une extrémité (32A) est enveloppée par le boîtier (20), et dont l'autre extrémité est assemblée avec une possibilité de rotation et de démontage avec le détecteur de rayonnement (40), au moyen d'un écrou d'accouplement (34), en ce que le faisceau de conduits de lumière (30) est dévié de 90° par rapport à son allure verticale, à l'aide du tube (32) plié en coude, en direction du détecteur de rayonnement (40) situé à l'horizontale, et en ce qu'un manchon métallique (33), en acier spécial de préférence, qui s'étend sur la zone de jonction avec les têts, est disposé entre le faisceau de conduits de lumière (30) et le tube (32).

9. Appareil de mesure du rayonnement suivant les revendications 1 et 4, caractérisé en ce que le boîtier (20) reçoit un autre dispositif d'injection (50), qui s'achève à l'extérieur de la section d'entrée du diaphragme d'entrée (21), et qui se compose également, de préférence, d'un flexible d'injection (51), d'une flexible de raccordement (52) avec des brides (51A, 52A) correspondantes, et d'un raccord fileté (53).
